# EUROPEAN PATENT APPLICATION

(11) **EP 4 650 915 A1**
(43) Date of publication of application: **19.11.2025**
(21) Application number: 24773903.0
(22) Date of filing: 04.03.2024
(51) Int. Cl.: G06F 1/3234

(54) **SCENE-BASED TERMINAL CONTROL METHOD AND APPARATUS**

(30) Priority: 17.03.2023 CN 202310297794
(71) Applicant: Huawei Technologies Co., Ltd., Shenzhen, Guangdong 518129 (CN)
(72) Inventor: CHEN, Minghui, Shenzhen, Guangdong 518129 (CN); QIU, Hongbing, Shenzhen, Guangdong 518129 (CN); LI, Shuai, Shenzhen, Guangdong 518129 (CN)
(74) Representative: Maiwald GmbH
(86) International application number: PCT/CN2024/079955
(87) International publication number: WO 2024/193335

(57) **Abstract**

A scene-based terminal control method and apparatus are disclosed. The method is applied to a terminal device, and includes: obtaining running scene information of a first application; determining a running scene of the first application based on the running scene information; determining, based on the running scene, a resource control operation corresponding to the running scene; and performing the resource control operation. The scene information includes scene indication information output by the first application and/or a user interface rendering event, output by a system, of the first application. The user interface rendering event includes one or more of a texture mapping rendering event, a text rendering event, and a control status event. The resource control operation includes one or more of a display setting, an audio setting, a report rate setting, a sensor setting, and a background application setting.

## Description

### CROSS-REFERENCE TO RELATED APPLICATIONS

This application claims priority to Chinese Patent Application No. 202310297794.1, filed with the China National Intellectual Property Administration on March 17, 2023 and entitled "SCENE-BASED TERMINAL CONTROL METHOD AND APPARATUS", which is incorporated herein by reference in its entirety.

### TECHNICAL FIELD

This application relates to the field of computer technologies, and in particular, to a scene-based terminal control method and apparatus.

### BACKGROUND

An application may need to occupy a large quantity of resources when running on a terminal device, leading to high power consumption of the terminal device. To reduce power consumption of the terminal device, resource control may be performed based on temperature of a processor in the terminal device. For example, when the temperature of the processor in the terminal device is higher than a specified threshold, frequency limiting may be performed on a system on chip (system on chip, SoC, also referred to as a system-on-a-chip) to reduce the power consumption. However, after frequency limiting is performed on the SoC, insufficient resources are provided for the application. This may lead to freezing of the application and affect user experience.

### SUMMARY

Embodiments of this application provide a scene-based terminal control method and apparatus, to control resources of a terminal device based on a running scene of an application. This can reduce power consumption of the terminal device while ensuring user experience.

According to a first aspect, a scene-based terminal control method is provided, and may be applied to a terminal device. The method includes: The terminal device obtains running scene information of a first application, determines a running scene of the first application based on the running scene information, determines, based on the running scene, a resource control operation corresponding to the running scene, and executes the resource control operation. The scene information includes scene indication information output by the first application and/or a user interface rendering event, output by a system, of the first application. The user interface rendering event includes one or more of a texture mapping rendering event, a text rendering event, and a control status event. The resource control operation includes one or more of a display setting, an audio setting, a report rate setting, a sensor setting, and a background application setting.

Different running scenes affect user experience to different degrees. In the foregoing implementation, different resource control operations may be set for different running scenes, so that differentiated control operations can be performed on resources of the terminal device based on a running scene of an application, to improve user experience. For example, a running scene that affects user experience to a large degree, for example, a battle scene in a game application, may occupy a large quantity of resources, to improve user experience; and a running scene that affects user experience to a small degree, for example, a non-battle scene in a game application, may occupy a small quantity of resources, to reduce power consumption of the terminal device, without greatly affecting user experience.

In a possible implementation, the first application is a game application, and the texture mapping rendering event includes one or more of the following: an event of rendering a terrain texture mapping, an event of rendering a main scene map, and an event of rendering a mapping of a game character status.

Different mappings may need to be rendered in different running scenes. In the foregoing implementation, the texture mapping rendering event is recognized, to ensure accuracy of running scene recognition.

Optionally, determining the running scene of the first application based on the running scene information includes: if the running scene information includes the event of rendering the terrain texture mapping and/or the event of rendering the main scene map, determining that the running scene of the first application is a first scene; or if the running scene information includes the event of rendering the mapping of the game character status, and the event of rendering the mapping of the game character status is an event of a mapping of death of a game character, determining that the running scene of the first application is a second scene.

In a possible implementation, the scene indication information output by the first application includes a scene identifier. Determining the running scene of the first application based on the running scene information includes: determining, based on a correspondence between a running scene identifier and a running scene type, a running scene type corresponding to the scene identifier. Determining, based on the running scene, the resource control operation corresponding to the running scene includes: determining, based on the running scene type, a resource control policy corresponding to the running scene type.

In the foregoing implementation, the running scene is determined based on the scene indication information output by the first application, to ensure accuracy of scene recognition.

In a possible implementation, determining, based on the running scene, the resource control operation corresponding to the running scene includes: determining, based on the running scene, a resource control policy corresponding to the running scene; and determining, based on the resource control policy, a resource control operation corresponding to the resource control policy. The resource control policy includes one or more of the following: a responsiveness level, a display effect level, a sound quality level, a vibration level, and a background load level. Determining, based on the resource control policy, the resource control operation corresponding to the resource control policy includes one or more of the following:
determining a target report rate and/or a responsiveness thread scheduling priority based on the responsiveness level;
determining one or more of target luminance, a target resolution, target texture precision, and a target frame rate based on the display effect level;
determining a target volume and/or a target quantity of sound channels based on the sound quality level;
determining an on/off status of a sensor based on the vibration level; and
determining a network channel on/off status of a background application based on the background load level.

In the foregoing implementation, the resource control policy is divided into different levels, and each level corresponds to a target parameter and/or a target setting operation, so that flexibility of setting or updating the resource control policy can be improved.

Optionally, the first application is the game application, and the running scene of the first application is one of the first scene and the second scene;
a responsiveness level corresponding to the first scene is higher than a responsiveness level corresponding to the second scene;
a display effect level corresponding to the first scene is higher than a display effect level corresponding to the second scene;
a sound quality level corresponding to the first scene is higher than a sound quality level corresponding to the second scene;
a vibration level corresponding to the first scene is higher than a vibration level corresponding to the second scene; and
a background load level corresponding to the first scene is lower than a background load level corresponding to the second scene.

In a possible implementation, the running scene is the first scene. The method further includes: determining a first area, where the first area is an area, on a user interface of the first application, to which a user pays attention. Performing the resource control operation includes: after the target frame rate is determined based on the display effect level, setting a frame rate of the first area based on the target frame rate. In the foregoing implementation, when the running scene is the first scene, a higher frame rate may be set for the area to which the user pays attention, to reduce resource overheads of the terminal device as much as possible while improving user experience.

In a possible implementation, the method further includes: receiving indication information from a second application, where the indication information is sent by the second application based on a received user operation, and the user operation is used to request to enable a scene-based resource control function; and enabling the scene-based resource control function based on the indication information. In this implementation, system flexibility can be improved.

According to a second aspect, a scene-based terminal control apparatus is provided. The apparatus may be a terminal device or a functional module in a terminal device. The apparatus may include a processing unit and a transceiver unit. The processing unit is configured to: obtain running scene information of a first application, where the scene information includes scene indication information output by the first application and/or a user interface rendering event, output by an operating system, of the first application, and the user interface rendering event includes one or more of a texture mapping rendering event, a text rendering event, and a control status event; and
determine a running scene of the first application based on the running scene information; determine, based on the running scene, a resource control operation corresponding to the running scene, where the resource control operation includes one or more of a display setting, an audio setting, a report rate setting, a sensor setting, and a background application setting; and perform the resource control operation.

In a possible implementation, the first application is a game application, and the texture mapping rendering event includes one or more of the following: an event of rendering a terrain texture mapping, an event of rendering a main scene map, and an event of rendering a mapping of a game character status.

In a possible implementation, the processing unit is specifically configured to: if the running scene information includes the event of rendering the terrain texture mapping and/or the event of rendering the main scene map, determine that the running scene of the first application is a first scene; or if the running scene information includes the event of rendering the mapping of the game character status, and the event of rendering the mapping of the game character status is an event of a mapping of death of a game character, determine that the running scene of the first application is a second scene.

In a possible implementation, the scene indication information output by the first application includes a scene identifier. The processing unit is specifically configured to: determine, based on a correspondence between a running scene identifier and a running scene type, a running scene type corresponding to the scene identifier; and determine, based on the running scene type, a resource control policy corresponding to the running scene type.

In a possible implementation, the processing unit is specifically configured to: determine, based on the running scene, a resource control policy corresponding to the running scene; and determine, based on the resource control policy, a resource control operation corresponding to the resource control policy. The resource control policy includes one or more of the following: a responsiveness level, a display effect level, a sound quality level, a vibration level, and a background load level. Determining, based on the resource control policy, the resource control operation corresponding to the resource control policy includes one or more of the following:
determining a target report rate and/or a responsiveness thread scheduling priority based on the responsiveness level;
determining one or more of target luminance, a target resolution, target texture precision, and a target frame rate based on the display effect level;
determining a target volume and/or a target quantity of sound channels based on the sound quality level;
determining an on/off status of a sensor based on the vibration level; and
determining a network channel on/off status of a background application based on the background load level.

Optionally, the first application is the game application, and the running scene of the first application is one of the first scene and the second scene;
a responsiveness level corresponding to the first scene is higher than a responsiveness level corresponding to the second scene;
a display effect level corresponding to the first scene is higher than a display effect level corresponding to the second scene;
a sound quality level corresponding to the first scene is higher than a sound quality level corresponding to the second scene;
a vibration level corresponding to the first scene is higher than a vibration level corresponding to the second scene; and
a background load level corresponding to the first scene is lower than a background load level corresponding to the second scene.

In a possible implementation, the running scene is the first scene. The processing unit is further configured to determine a first area, where the first area is an area, on a user interface of the first application, to which a user pays attention. The processing unit is specifically configured to: after the target frame rate is determined based on the display effect level, set a frame rate of the first area based on the target frame rate.

According to a third aspect, an apparatus is provided. The apparatus may include a processor and a memory. The memory stores one or more computer programs. The one or more computer programs include instructions. When the instructions are executed by the processor, the apparatus is enabled to perform the method according to any one of the implementations of the first aspect.

According to a fourth aspect, a readable storage medium is provided, and includes a computer program. When the computer program is run on an apparatus, the apparatus is enabled to perform the method according to any one of the implementations of the first aspect.

According to a fifth aspect, a computer program product is provided. When the computer program product runs on a terminal device, the terminal device is enabled to perform the method according to any one of the implementations of the first aspect.

According to a sixth aspect, a chip system is provided, and includes: a memory, configured to store a computer program; and a processor, where when the processor invokes the computer program from the memory and runs the computer program, a terminal device on which the chip system is installed is enabled to perform the method according to any one of the implementations of the first aspect.

For beneficial effect of the second aspect to the sixth aspect, refer to the beneficial effect of the first aspect. Details are not described again.

### BRIEF DESCRIPTION OF DRAWINGS

FIG. 1 is a diagram of a hardware structure of a terminal device according to an embodiment of this application;
FIG. 2 is a diagram of a software structure of a terminal device according to an embodiment of this application;
FIG. 3 is a diagram of a structure of a resource control module according to an embodiment of this application;
FIG. 4 is a diagram of a correspondence between a resource control policy and a running scene according to an embodiment of this application;
FIG. 5 is a diagram of a target parameter and/or a target setting operation corresponding to each level of a resource control policy according to an embodiment of this application;
FIG. 6 is a diagram of structures of a policy decision module and a policy execution module according to an embodiment of this application;
FIG. 7 is a schematic flowchart of a scene-based terminal control method according to an embodiment of this application;
FIG. 8 is a diagram of scene identifier definitions according to an embodiment of this application;
FIG. 9 is a diagram of a correspondence between a running scene and a scene type according to an embodiment of this application;
FIG. 10 is a diagram of a scene-based terminal control process in a game application according to an embodiment of this application;
FIG. 11 is a diagram of a setting interface provided by an application assistant according to an embodiment of this application; and
FIG. 12 is a diagram of a structure of an apparatus according to an embodiment of this application.

### DESCRIPTION OF EMBODIMENTS

The following clearly and completely describes technical solutions in embodiments of this application with reference to accompanying drawings in embodiments of this application. Terms used in the following embodiments are merely intended to describe specific embodiments, but not to limit this application. The terms "an", "a", "the", "the foregoing", and "this" of singular forms used in this specification and the appended claims of this application are also intended to include expressions such as "one or more", unless otherwise specified in the context clearly. It should be further understood that, in embodiments of this application, "one or more" means one, two, or more, and "and/or" describes an association relationship between associated objects, and indicates that three relationships may exist. For example, A and/or B may indicate the following cases: Only A exists, both A and B exist, and only B exists, where A and B may be in a singular form or a plural form. The character "/" usually indicates an "or" relationship between the associated objects.

Reference to "an embodiment", "some embodiments", or the like described in this specification means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "including but not limited to", unless otherwise specifically emphasized in another manner.

In embodiments of this application, "a plurality of" means two or more. It should be noted that, in descriptions of embodiments of this application, the terms "first", "second", and the like are merely intended for differentiation in descriptions, but should not be construed as indicating or implying relative importance or indicating or implying a sequence.

A method provided in embodiments of this application may be implemented on a terminal device. The terminal device may be equipped with a display, and human-computer interaction can be performed through the display. For example, the terminal device may be a mobile phone, a tablet computer, a notebook computer, a netbook, a vehicle-mounted device, or a business intelligent terminal (including a video phone, an intelligent conference desktop terminal, and the like), a personal digital assistant (personal digital assistant, PDA), or an augmented reality (augmented reality, AR)/virtual reality (virtual reality, VR) device. A specific form of the terminal device is not limited in embodiments of this application.

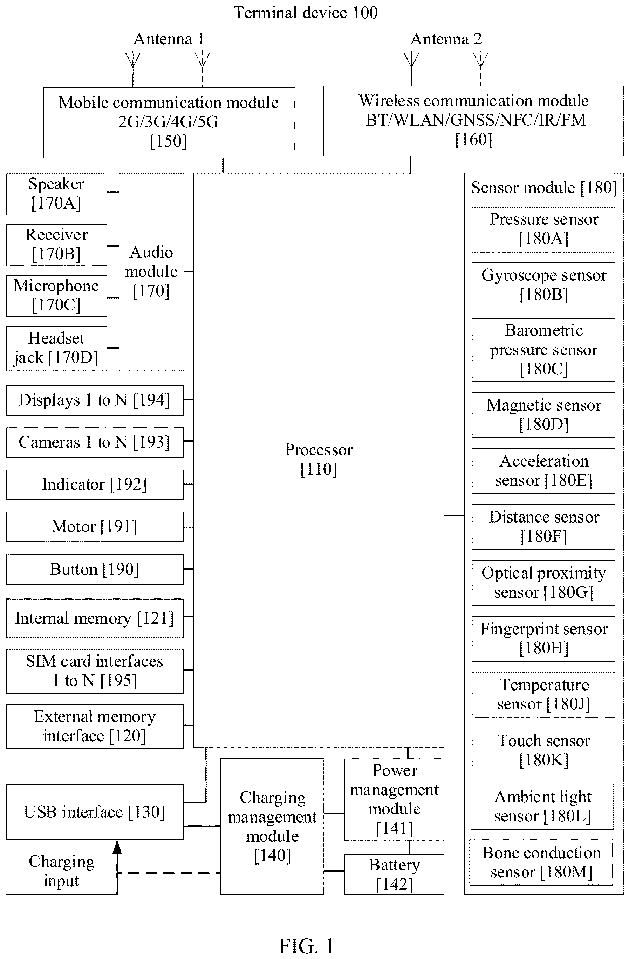

FIG. 1 is a diagram of an internal hardware structure of a terminal device according to an embodiment of this application. The terminal device may perform the method provided in embodiments of this application. The terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a display processing unit (display processing unit, DPU), and/or a neural-network processing unit (neural-network processing unit, NPU). Different processing units may be independent components, or may be integrated into one or more processors. In some embodiments, the terminal device 100 may alternatively include one or more processors 110. The processor may be a nerve center and a command center of the terminal device 100. The processor may generate an operation control signal based on an instruction operation code and a timing signal, to control instruction reading and instruction execution. A memory may be further disposed in the processor 110 to store instructions and data.

The sensor module 180 may include one or more of the following: a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and a vibration sensor.

The terminal device 100 may implement a display function through the GPU, the display 194, the application processor AP, and the like. The display 194 is configured to display an image, a video, and the like.

The terminal device 100 may implement an audio function, for example, music playing or recording, through the audio module 170, the speaker 170A, the receiver 170B, the microphone 170C, the headset jack 170D, the application processor, and the like.

It can be understood that the structure shown in this embodiment of this application does not constitute a specific limitation on the terminal device 100. In some other embodiments of this application, the terminal device 100 may include more or fewer components than those shown in the figure, or some components may be combined, or some components may be split, or different component layouts may be used. The components shown in the figure may be implemented by hardware, software, or a combination of software and hardware.

A software system of the terminal device may use a hierarchical architecture, an event-driven architecture, a microkernel architecture, a microservice architecture, or a cloud architecture. In embodiments of this application, a software system (for example, an Android (Android^{®}) system) with a hierarchical architecture is used as an example to describe a software structure of the terminal device.

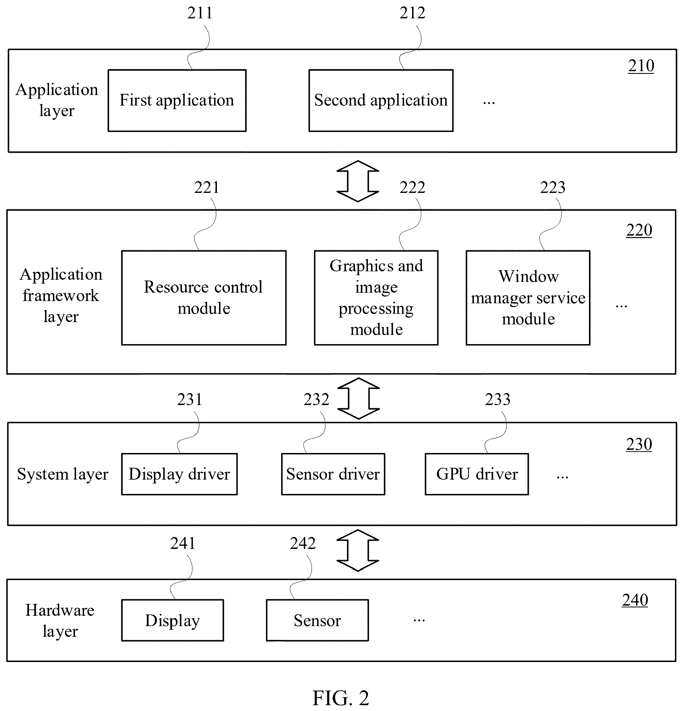

FIG. 2 is a diagram of a hierarchical software structure of a terminal device according to an embodiment of this application. In a hierarchical architecture, a software system of the terminal device is divided into several layers, and each layer has a clear role and task. The layers communicate with each other through a software interface.

The Android system is divided into four layers: an application layer (applications) 210, an application framework layer (application framework) 220, an Android runtime (Android runtime) and system library, and a kernel layer (kernel). Layers of the software structure of the terminal device are not limited in this embodiment of this application. The Android runtime and system library and the kernel layer may be considered as one layer, referred to as a system layer 230. It should be understood that, in FIG. 2, a hardware layer 240 in the terminal device is further added based on the Android system.

It should be understood that modules included in the layers shown in FIG. 2 are modules in embodiments of this application, and modules included in the following layers do not constitute a limitation on a structure of the terminal device or a layer (example description) at which the modules are deployed. The modules shown in FIG. 2 may be separately deployed, or several modules may be deployed together. Module division and module names in FIG. 2 are merely examples.

The application layer may include a series of application packages. The application layer may include applications such as Camera, Gallery, Calendar, Phone, Map, Navigation, Bluetooth, Music, Video, and Messages. The applications may include a system application and a third-party application. The figure shows only a first application 211 and a second application 212 as an example. For example, the first application 211 may be a game application, and the second application 212 may be an application assistant. The application assistant is client management software that can be installed on the terminal device. The application assistant provided in this embodiment of this application has a function of enabling scene-based resource control.

The application framework layer may provide an application programming interface (application programming interface, API) and a programming framework for an application at the application layer. The application framework layer may include some predefined functions. As shown in FIG. 2, the application framework layer may include a window manager service (window manager service, WMS) module 223, a graphics and image processing module 222, and a resource control module 221. The window manager service module 223 is configured to manage a user interface. The graphics and image processing module 222 is configured to draw a user interface. For example, the graphics and image processing module 222 may include a rendering module and a layer compositor. The rendering module is configured to render a user interface. The layer compositor is configured to perform layer composition on rendered layers to obtain a to-be-displayed user interface. The resource control module 221 may implement the method provided in embodiments of this application.

In this embodiment of this application, the Android runtime and system library and the kernel layer are considered as one layer. Therefore, the system layer 230 may include functional modules in the Android runtime and system library and at the kernel layer. As shown in FIG. 2, the system layer may include a hardware driver for driving hardware to operate, for example, a display driver (display driver) 231, a sensor driver 232, or a graphics processing unit driver (graphics processing unit driver, GPU driver) 233. This is not limited in this embodiment of this application.

The hardware layer 240 includes hardware in the terminal device. It can be understood that a display 241, a sensor 242, and the like in the following embodiments are shown at the hardware layer in FIG. 2.

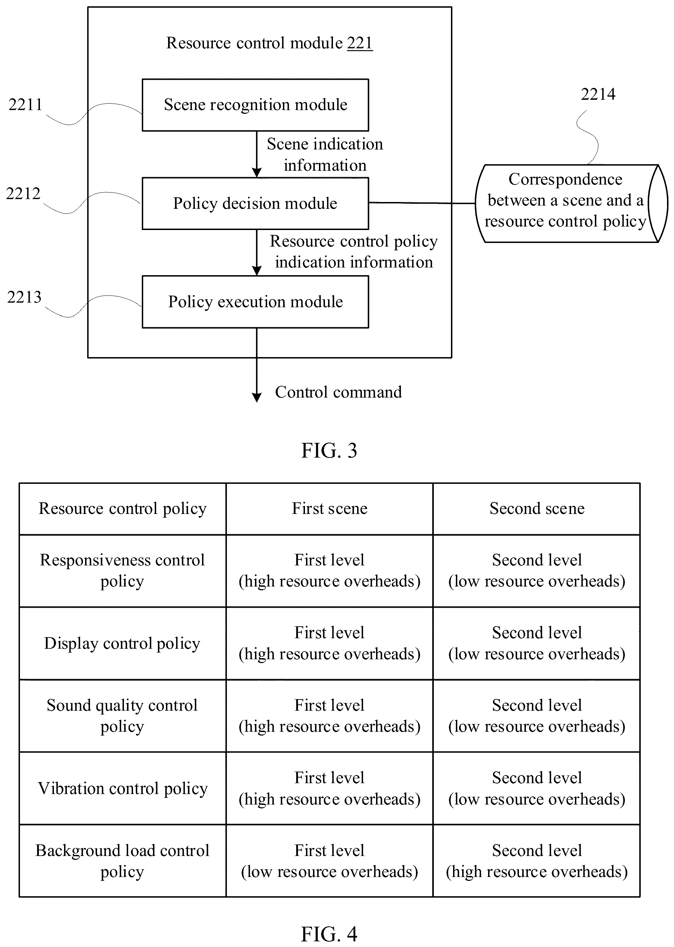

The resource control module 221 at the application framework layer may recognize a running scene of an application, obtain a corresponding resource control policy based on the running scene of the application, and execute the resource control policy. Correspondingly, as shown in FIG. 3, the resource control module 221 may include a scene recognition module 2211, a policy decision module 2212, and a policy execution module 2213. The scene recognition module 2211 may be configured to obtain running scene information of the first application 211, determine a running scene of the first application 211 based on the running scene information of the first application 211, and send scene indication information to the policy decision module 2212. The policy decision module 2212 may be configured to determine, based on a running scene indicated by the scene indication information, a resource control policy corresponding to the running scene, and send resource control policy indication information to the policy execution module 2213. The policy execution module 2213 may be configured to perform a corresponding resource control operation based on a resource control policy indicated by the resource control policy indication information. For specific descriptions of the foregoing method implemented by the resource control module 221, refer to the following descriptions.

In a possible implementation, as shown in FIG. 3, the policy decision module 2212 may obtain, based on a running scene by querying a correspondence 2214 between a scene and a resource control policy, a resource control policy corresponding to the running scene.

In a possible implementation, the resource control policy may be preset by a system. Further, the resource control policy may be preset for an application of a specified type, for example, may be preset for a game application (for example, a battle game). Further, the resource control policy may be updated by updating an operating system. In another possible implementation, the resource control policy may be set by an application, for example, may be included in an installation package of the application. Further, the resource control policy of the application may be updated by updating the application.

In a possible implementation, the correspondence 2214 between a scene and a resource control policy may be preset by a system. Further, the correspondence may be preset for an application of a specified type, for example, may be preset for a game application (for example, a battle game). Further, the correspondence may be updated by updating an operating system. In another possible implementation, the correspondence may be set by an application, for example, may be included in an installation package of the application. Further, the correspondence may be updated by updating the application.

It can be understood that module division and module naming in FIG. 3 are merely examples. This is not limited in embodiments of this application.

For ease of understanding embodiments of this application, the following describes a running scene of an application in embodiments of this application.

From perspectives of a running stage of a first application, a function provided by the first application, and the like, the first application may include a plurality of running scenes. For example, the first application is a game application, and a running scene of the game application may include the following scenes:
Game startup scene: In this scene, a terminal device loads an application resource, performs initialization settings, and the like.

Game update scene: In this scene, a terminal device obtains updated application data from a network side, and updates application data of a local game.

Game setting scene: In this scene, a terminal device may set a game based on an operation of a user, for example, set a game mode (for example, a single-player combat mode or a multi-player combat mode) based on selection of the user.

Main interface scene: In this scene, a main interface of a game is displayed.

Player loading scene: In this scene, a game player is loaded. For example, a terminal device establishes a connection to a terminal device of another user who participates in a game.

Game battle scene: In this scene, a user may perform a battle with another player through a user operation (for example, a screen touch operation).

Battle end scene: This scene may be triggered after a battle ends. A condition for entering this scene may be that a character participating in the battle dies or that a user stops the battle through a touch operation.

The foregoing running scenes are merely examples, and division of running scenes is not limited in embodiments of this application.

The first application may switch from one running scene to another running scene. The running scene may be switched based on a user operation. For example, after a user starts a game application, the game application enters a game startup scene; after the user triggers a "Game settings" function button on a user interface, the game application displays a game setting interface and enters a game setting scene; and after the user completes game settings and selects a "Start game" function button on a user interface, the game application accesses a game battle scene. The running scene may alternatively be switched by the first application according to a running status. For example, in some battle scenes, a game enters a battle end scene after a character participating in a battle dies.

In some embodiments of this application, running scenes may be classified into different scene types. Optionally, classification into the scene types may be performed based on whether a running scene is a scene corresponding to core user experience (in other words, whether the running scene is a scene related to core user experience). This is not limited in embodiments of this application. In embodiments of this application, a running scene or a scene type that is related to core user experience is referred to as a first scene, and a running scene or a scene type that is not related to or has low relevance to core user experience is referred to as a second scene. The foregoing game application is used as an example. The foregoing running scenes may be classified into a first scene (also referred to as a battle scene) and a second scene (also referred to as a non-battle scene). The "game battle scene" is a scene related to core user experience and therefore is categorized as a first scene (a battle scene). The other running scenes are not scenes related to core user experience and therefore are categorized as second scenes (non-battle scenes).

Different running scenes or different types of running scenes have different requirements for user experience. Therefore, resource control policies matching different running scenes or different types of running scenes may be set for the running scenes, to meet requirements of different running scenes or different types of running scenes for user experience. For example, a large quantity of resources may be allocated to a running scene related to core user experience, so that a user obtains good user experience; and a small quantity of resources may be allocated to a running scene that is not related to or has low relevance to core user experience, to reduce power consumption of a terminal.

For ease of understanding embodiments of this application, the following describes a resource control policy in embodiments of this application.

The resource control policy provided in embodiments of this application may include one or more of the following policies.

### (1) Display control policy

Display control is intended to control picture quality. The display control policy may include a picture quality control policy and/or a smoothness control policy. The picture quality control policy may include indicators such as luminance, a resolution, and texture precision. A color level is an index standard that indicates luminance intensity of an image, and is also referred to as a color index. In digital image processing, the color level indicates a gray resolution (also referred to as a grayscale resolution or an amplitude resolution). An image resolution is used to determine a quantity of pixels that constitute an image, and the resolution determines fineness of image details. The texture precision represents texture of an object surface and a unique form and pattern feature that are formed in terms of a color, luminance, and a structure, and is important content of texture performance. Higher texture precision indicates higher texture performance. Smoothness indicates smoothness of a picture, and may be measured by using a frame rate. The frame rate is measured in FPS (frames per second), to be specific, a quantity of pictures rendered per second. A higher frame rate indicates higher smoothness. For a game application, if a frame rate is 60 FPS or higher than 60 FPS, a picture is smooth; or if a frame rate is lower than 60 FPS, a picture is not smooth. For example, when the frame rate is 60 FPS or lower, a user may feel uncomfortable when watching a picture (for example, feel stalling of the picture).

It can be understood that the picture quality control policy and the smoothness control policy may be combined into the display control policy. To be specific, the display control policy may control one or more of luminance, a resolution, texture precision, and a frame rate.

In a possible display control policy provided in embodiments of this application, higher luminance, a higher resolution, higher texture precision, and a higher frame rate may be set for a first scene, so that a user can obtain better visual experience; and lower luminance, a lower resolution, lower texture precision, and a lower frame rate may be set for a second scene, so that power consumption of a terminal device can be reduced.

### (2) Responsiveness control policy

Responsiveness indicates a speed at which screen content responds to a sliding gesture when a user slides on a screen. Faster response indicates better responsiveness. The responsiveness may be measured by using a touch report rate. The touch report rate is a quantity of times that a screen performs scanning per second. A higher touch report rate indicates faster response of the screen and better responsiveness. For example, a touch report rate of 240 Hz indicates that a touchscreen can scan the screen 240 times per second. A finger touch location is calculated during each scan, and touch information found through scanning is reported to a system for processing.

For a game application, if a touch report rate is 240 Hz or higher, responsiveness is good; or if a touch report rate is 120 Hz or lower, responsiveness is poor.

In a possible responsiveness control policy provided in embodiments of this application, for a first scene, a high touch report rate may be set, and a high priority may be further set for a responsiveness thread, so that a user can obtain better operation experience; and for a second scene, a low touch report rate may be set, and a low priority may be further set for a responsiveness thread, so that power consumption of a terminal device can be reduced. The responsiveness thread is configured to: when a finger touch operation is detected, calculate a finger touch location, and perform further response and processing based on the finger touch location.

### (3) Sound quality control policy

Sound quality is quality of sound, and may be indicated by a volume, a quantity of sound channels, and the like. A volume of sound is intensity and an amplitude of audio. Sound channels (sound channel) are independent audio signals captured or replayed at different spatial locations during sound recording or playing. The quantity of sound channels is a quantity of sound sources during sound recording or a corresponding quantity of speakers during a replay. A larger quantity of sound channels indicates better sound quality.

In a possible sound quality control policy provided in embodiments of this application, a high volume and a large quantity of sound channels may be set for a first scene, so that a user can obtain better auditory experience; and a low volume and a small quantity of sound channels may be set for a second scene, so that power consumption of a terminal device can be reduced.

### (4) Vibration control policy

Vibration can improve a vibration feedback of a terminal device (for example, a vibration feedback is obtained when an object on an interface is touched), and improve application use experience. A game application is used as an example. During playing of the game, the terminal device may automatically recognize a shooting action and vibrate, to improve game experience.

In a possible vibration control policy provided in embodiments of this application, a vibration function may be enabled for a first scene, so that a user can obtain better vibration experience; and a vibration function may be disabled for a second scene, so that power consumption of a terminal can be reduced.

### (5) Background load control policy

Foreground running means that an application is running in a processor. For example, a running game application can implement human-computer interaction. An application in this running mode may be referred to as a foreground application. Background running is a mode in which only a lightweight service in an application runs. For example, the lightweight service may obtain a new network message and notify a user of the new network message (for example, message notification may be performed through a pop-up window), or perform periodic reminding or other operations. An application in this running mode may be referred to as a background application.

In a possible background load control policy provided in embodiments of this application, a background application network channel may be disabled for a first scene, and a background application network channel may be enabled for a second scene. When the background application network channel is enabled, the background application may receive a message from a network side, and may perform message reminding through a pop-up window or the like. When the background application network channel is disabled, the background application cannot receive a message from a network side. Compared with the case in which the background application network channel is enabled, in the case in which the background application network channel is disabled, interference from a message notification of the background application can be avoided for the foreground application, so that a user focuses on the foreground application. In addition, compared with the case in which the background application network channel is enabled, in the case in which the background application network channel is disabled, resource overheads can be further reduced.

The foregoing merely lists several resource control policies as examples. This is not limited in embodiments of this application. It can be understood that another resource control policy, for example, a SoC resource supply control policy, may be further used in embodiments of this application. In a possible SoC resource supply control policy provided in embodiments of this application, a high SoC frequency may be set for a first scene, and a low SoC frequency may be set for a second scene.

The foregoing resource control policies may be used in combination. In this way, resource control can be performed from a plurality of perspectives, so that user experience can be improved for some running scenes, and power consumption of a terminal can be reduced for other running scenes on the basis of ensuring user experience.

In a possible resource control policy setting mode provided in embodiments of this application, a resource control policy corresponding to a running scene or a scene type may include a target parameter value or a target setting operation of a corresponding resource control operation. A responsiveness control policy is used as an example. A responsiveness control policy corresponding to a first scene includes a value or a value range of a target report rate. Specifically, the value range of the target report rate is that the touch report rate is higher than 240 Hz. The responsiveness control policy may further include a target setting operation. Specifically, the target setting operation is setting a high priority for a responsiveness thread.

In another possible resource control policy setting mode provided in embodiments of this application, a resource control policy corresponding to a running scene or a scene type may be a level of a resource control policy. The resource control policy may include two or more levels, and each level corresponds to a target parameter value and/or a target setting operation of a resource control operation. A responsiveness control policy is used as an example. A responsiveness control policy corresponding to a first scene is a first responsiveness level, and a responsiveness control policy corresponding to a second scene is a second responsiveness level. A value range of a target report rate corresponding to the first responsiveness level is that the touch report rate is higher than 240 Hz, and a target setting operation is setting a high priority for a responsiveness thread. A value range of a target report rate corresponding to the second responsiveness level is that the touch report rate is lower than 120 Hz, and a target setting operation is setting a low priority for a responsiveness thread. In the foregoing resource control policy setting mode, system flexibility can be improved. For example, a target parameter value and/or a target setting operation corresponding to one or more levels may be flexibly adjusted according to a requirement without changing a level of a resource control policy.

For example, FIG. 4 shows a correspondence between a resource control policy and a running scene according to an embodiment of this application. As shown in FIG. 4, a responsiveness control policy, a display control policy, a sound quality control policy, a vibration control policy, and a background load control policy that correspond to a first scene each are at a first level, and a responsiveness control policy, a display control policy, a sound quality control policy, a vibration control policy, and a background load control policy that correspond to a second scene each are at a second level. For a responsiveness control policy, a display control policy, a sound quality control policy, and a vibration control policy, resource overheads corresponding to a first level are higher than resource overheads corresponding to a second level. For a background load control policy, resource overheads corresponding to a first level are lower than resource overheads corresponding to a second level.

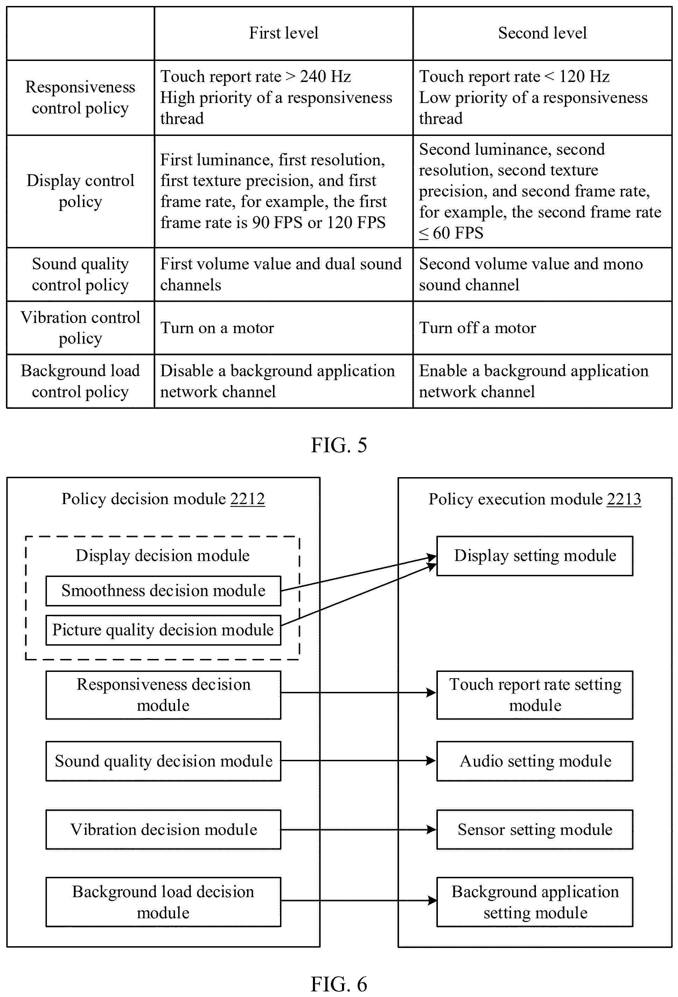

For example, FIG. 5 shows a target parameter and/or a target setting operation corresponding to each level of a resource control policy according to an embodiment of this application. As shown in FIG. 5, a touch report rate corresponding to a first level of a responsiveness control policy is higher than 240 Hz, and a priority of a responsiveness thread is a high priority; and a touch report rate corresponding to a second level of the responsiveness control policy is lower than 120 Hz, and a priority of a responsiveness thread is a low priority. A display parameter corresponding to a first level of a display control policy includes first luminance, a first resolution, first texture precision, and a first frame rate. A display parameter corresponding to a second level of the display control policy includes second luminance, a second resolution, second texture precision, and a second frame rate. The first luminance is greater than the second luminance. For example, the first luminance and the second luminance are luminance coefficients, and an R channel component, a G channel component, and a B channel component of each pixel are adjusted based on the luminance coefficients, to change luminance of an image. The first resolution is higher than the second resolution. For different types of terminal devices, values of the first resolution and the second resolution are also different. The first frame rate is higher than the second frame rate. For example, the first frame rate may be 90 FPS or 120 FPS, and the second frame rate may be any value within a range of less than or equal to 60 FPS. A target volume value corresponding to a first level of a sound quality control policy is a first volume value (for example, 80), and a quantity of target sound channels is dual sound channels. A target volume value corresponding to a first level of the sound quality control policy is a second volume value (for example, 50), and a quantity of target sound channels is a mono sound channel. The volume value may range from 0 to 100. A larger value indicates a higher volume. A target setting operation corresponding to a first level of a vibration control policy is turning on a motor of a vibration sensor, and a target setting operation corresponding to a second level of the vibration control policy is turning off a motor of a vibration sensor. A target setting operation corresponding to a first level of a background load control policy is disabling a background application network channel, and a setting operation corresponding to a second level of the background load control policy is enabling a background application network channel.

It can be understood that the parameter values shown in FIG. 5 are merely examples, and parameter values may be set based on a specific case (for example, a capability of a terminal device, a type of a terminal device, or an application requirement) during actual application.

It can be understood that, in FIG. 5, description is performed only by using an example in which a resource control policy includes two levels and a running scene includes two types. In some cases, a resource control policy may include more levels, and a running scene may also include more types. This is not limited in embodiments of this application.

It can be understood that, in FIG. 5, five resource control policies are set for each running scene or each running scene. In some embodiments, more or fewer resource control policies may alternatively be set for each running scene or each running scene. In some other embodiments, different quantities of resource control policies may alternatively be set for different running scenes or different types of running scenes. For example, the foregoing five resource control policies are set for a first scene, and four resource control policies other than the background load control policy are set for a second scene. This means that a background load setting remains unchanged when the first scene is switched to the second scene.

In a possible implementation provided in embodiments of this application, according to FIG. 3, after the policy decision module 2212 determines a resource control policy corresponding to a running scene, the policy execution module 2213 may execute the resource control policy. Optionally, the policy decision module 2212 may include one or more decision modules, and each decision module is configured to make a decision on a resource control policy. Correspondingly, the policy execution module 2213 may include one or more setting modules, and each setting module is configured to set a target parameter and/or perform a target setting operation according to a corresponding resource control policy.

FIG. 6 is a diagram of example structures of a policy decision module and a policy execution module according to an embodiment of this application. As shown in FIG. 6, the policy decision module 2212 may include a display decision module, a responsiveness decision module, a sound quality decision module, a vibration decision module, and a background load decision module. Correspondingly, the policy execution module 2213 may include a display setting module, a touch report rate setting module, an audio setting module, a sensor setting module, and a background application setting module. The display decision module may be further divided into a smoothness decision module and a picture quality decision module.

It can be understood that the foregoing module division is merely a possible implementation, and module division and a quantity of modules are not limited in embodiments of this application. In some other embodiments, further module division may alternatively not be performed on the policy decision module or the policy execution module.

FIG. 6 is used as an example. The following describes an execution process of each resource control policy.

After obtaining a smoothness control policy corresponding to a current running scene, the smoothness decision module may send resource control policy indication information to the display setting module. The display setting module may set a frame rate according to the corresponding smoothness control policy.

In a possible implementation, the resource control policy indication information sent by the smoothness decision module indicates a level of the smoothness control policy. The display setting module may obtain, based on the level indicated by the indication information, a target frame rate or a target frame rate range corresponding to the level, and generate a control command based on a current frame rate and/or a screen refresh rate. The control command may be sent to a GPU, so that the GPU outputs an image based on a frame rate indicated by the control command. The control command may alternatively be sent to a display driver at a system layer, and the display driver controls, based on a screen refresh rate indicated by the control command, a display to refresh a screen.

A target frame rate in the display control policy shown in FIG. 5 is used as an example. In one case, the smoothness decision module sends indication information of the first level to the display setting module. The display setting module obtains a target frame rate 120 FPS corresponding to the first level; compares the target frame rate with a current frame rate; and if the current frame rate is lower than 120 FPS and the target frame rate 120 FPS is less than or equal to a screen refresh rate threshold, sends a control command to the GPU to instruct the GPU to output an image at 120 FPS, and sends a control command to the display driver at the system layer to instruct to refresh the screen at 120 FPS; or if the current frame rate is lower than 120 FPS and the target frame rate 120 FPS is greater than a screen refresh rate threshold, sends a control command to the GPU to instruct the GPU to output an image at 120 FPS, and sends a control command to the display driver at the system layer to instruct to refresh the screen based on the screen refresh rate threshold; or if the current frame rate reaches 120 FPS, may keep the current frame rate unchanged. In another case, the smoothness decision module sends indication information of the second level to the display setting module. The display setting module obtains a target frame rate range (less than or equal to 60 FPS) corresponding to the second level; compares the target frame rate range with a current frame rate; and if the current frame rate is higher than an upper limit 60 FPS of the range, sends a control command to the GPU to instruct the GPU to output an image at any frame rate (for example, 50 FPS) within the range, and may further send a control command to the display driver at the system layer to instruct to refresh the screen at 50 FPS; or if the current frame rate falls within the range or is lower than a lower limit of the range, may keep the current frame rate unchanged.

In another possible implementation, the resource control policy indication information sent by the smoothness decision module indicates a target frame rate. The display setting module may set a frame rate based on the target frame rate indicated by the indication information, and may further perform screen refresh setting. For a setting method, refer to the foregoing descriptions.

In another possible implementation, when a terminal device supports frame rate adjustment by partition, a first area may be further determined. The first area is an area, on a user interface of a first application, to which a user pays attention. Correspondingly, in a case of determining, based on a running scene, a resource control policy corresponding to the running scene, a frame rate of the first area may be determined based on the running scene. For example, when the running scene is a first scene, only the frame rate of the first area may be increased based on a target frame rate in a smoothness control policy corresponding to the first scene. This can avoid an excessive increase in power consumption of the terminal device while ensuring visual experience of the user. Optionally, the area to which the user pays attention may be determined by obtaining a direction in which the head of the user moves or eyeballs of the user move or are fixed. For example, a VR helmet is used as an example. An area, on a user interface, to which a user pays attention may be determined based on a head turning direction and an eyeball fixation direction.

After obtaining a picture quality control policy corresponding to a current running scene, the picture quality decision module may send resource control policy indication information to the display setting module. The display setting module may perform display setting according to the corresponding picture quality control policy. In a possible implementation, the resource control policy indication information sent by the picture quality decision module indicates a level of the picture quality control policy. The display setting module may obtain, based on the level indicated by the indication information, a target display parameter (for example, including luminance, a resolution, and texture precision) corresponding to the level, and generate a control command based on the target display parameter. The control command is sent to the display driver at the system layer, and the display driver controls the GPU to output an image based on the target display parameter. In another possible implementation, the resource control policy indication information sent by the picture quality decision module indicates a target display parameter. The display setting module may generate a control command based on the target display parameter. The control command is sent to the display driver at the system layer, and the display driver controls the GPU to output an image based on the target display parameter.

Optionally, the control command sent by the display setting module may indicate a luminance adjustment coefficient, and the GPU may adjust values of G, R, and B channels of each pixel based on the luminance adjustment coefficient. It can be understood that a luminance adjustment method is not limited in embodiments of this application.

It can be understood that the smoothness decision module and the picture quality decision module may alternatively be combined into the display decision module.

After obtaining a responsiveness control policy corresponding to a current running scene, the responsiveness decision module may send resource control policy indication information to the touch report rate setting module. The touch report rate setting module may set a touch report rate according to the corresponding responsiveness control policy. In a possible implementation, the resource control policy indication information sent by the responsiveness decision module indicates a level of the responsiveness control policy. The touch report rate setting module may obtain, based on the level indicated by the indication information, a target touch report rate and a responsiveness thread priority setting operation that correspond to the level, and generate a control command based on the target touch report rate. The control command is sent to a driver at the system layer, and the driver controls a touchscreen to perform code scanning at the target touch report rate. The touch report rate setting module may further set a priority of a responsiveness thread based on the responsiveness thread priority setting operation corresponding to the level. In another possible implementation, the resource control policy indication information sent by the responsiveness decision module indicates a target touch report rate and a responsiveness thread priority setting operation. The touch report rate setting module may set a touch report rate based on the target touch report rate indicated by the indication information, and may further set a priority of a responsiveness thread based on a responsiveness thread priority indicated by the indication information.

After obtaining a sound quality control policy corresponding to a current running scene, the sound quality decision module may send resource control policy indication information to the audio setting module. The audio setting module may set a speaker according to the corresponding sound quality control policy. In a possible implementation, the resource control policy indication information sent by the sound quality decision module indicates a level of the sound quality control policy. The audio setting module may obtain, based on the level indicated by the indication information, a target sound quality parameter (for example, including a volume and a quantity of sound channels) corresponding to the level, and generate a control command based on the target sound quality parameter. The control command is sent to a speaker driver at the system layer, and the speaker driver controls the speaker to output audio based on the target sound quality parameter. In another possible implementation, the resource control policy indication information sent by the sound quality decision module indicates a target sound quality parameter. The audio setting module may generate a control command based on the target sound quality parameter. The control command is sent to a speaker driver at the system layer, and the speaker driver controls the speaker to output audio based on the target sound quality parameter.

After obtaining a vibration control policy corresponding to a current running scene, the vibration decision module may send resource control policy indication information to the sensor setting module. The sensor setting module may set a sensor according to the corresponding vibration control policy, for example, may turn off or turn on a motor of a related sensor (for example, a vibration sensor). In a possible implementation, the resource control policy indication information sent by the vibration decision module indicates a level of the vibration control policy. The sensor setting module may obtain, based on the level indicated by the indication information, a target setting operation (the target setting operation may be turning on a motor of the vibration sensor or turning off a motor of the vibration sensor) corresponding to the level, and generate a control command based on the target setting operation. The control command is sent to a sensor driver at the system layer, and the sensor driver turns on or turns off the motor of the vibration sensor. In another possible implementation, the resource control policy indication information sent by the vibration decision module indicates a target setting operation. The sensor setting module may generate a control command based on the target setting operation indicated by the indication information. The control command is sent to a sensor driver at the system layer, and the sensor driver turns on or turns off the motor of the vibration sensor.

After obtaining a background load control policy corresponding to a current running scene, the background load decision module may send resource control policy indication information to the background application setting module. The background application setting module may perform setting according to the corresponding background load control policy, for example, may disable or enable a background application network channel. In a possible implementation, the resource control policy indication information sent by the background load decision module indicates a level of the background load control policy. The background application setting module may obtain, based on the level indicated by the indication information, a target setting operation (the target setting operation may be enabling the background application network channel or disabling the background application network channel) corresponding to the level, and indicate, based on the target setting operation, a related service (for example, a message management service) at an application framework layer to enable or disable the background application network channel. In another possible implementation, the resource control policy indication information sent by the background load decision module indicates a target setting operation. The background application setting module may indicate, based on the target setting operation indicated by the indication information, a related service (for example, a message management service) at an application framework layer to enable or disable the background application network channel.

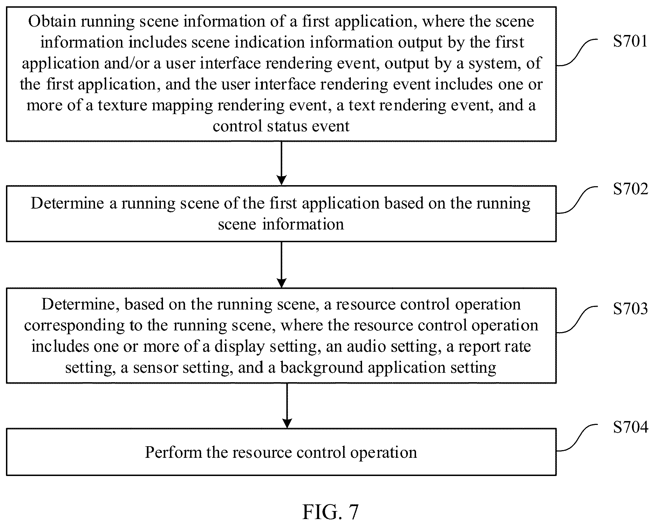

FIG. 7 is a schematic flowchart of a scene-based terminal control method according to an embodiment of this application. The process may be performed on a terminal device. An example structure of the terminal device may be shown in FIG. 1 or FIG. 2. The process may alternatively be performed by a functional module in a terminal device. The functional module may be located at an application framework layer. An example structure of the functional module may be shown in FIG. 3.

As shown in the figure, the process may include the following steps.

S701: Obtain running scene information of a first application.

The first application is an application running in the foreground. Optionally, the first application may be a game application, for example, a battle game.

In a possible implementation of obtaining the running scene information, the scene information is scene indication information output by the first application. For example, the scene indication information is a scene identifier (which may also be referred to as a scene value) for distinguishing between running scenes. The architecture shown in FIG. 2 is used as an example. In this embodiment of this application, the first application may send a scene identifier of a current running scene to a resource control module at the application framework layer through an interface between the first application and the application framework layer.

Optionally, the first application may determine, based on an operation of a user, that a running scene is switched, and send indication information of a switched-to target running scene to the resource control module. For example, when the user triggers a "Settings" button on a user interface, the first application may determine that switching to a setting interface needs to be performed, and send, to the resource control module, indication information of a running scene corresponding to the setting interface. Alternatively, the first application may automatically send indication information of a running scene to the resource control module based on a running status. For example, the first application is a game application. When a character participating in a battle dies, switching to a scene of replaying the character needs to be performed. In this case, the application may send, to the resource control module, indication information of a running scene corresponding to the replay scene.

Optionally, the interface between the first application and the application framework layer may be an interface defined in embodiments of this application, and is configured to transmit a scene identifier of a running scene of the first application. For example, a manufacturer of the terminal device may cooperate with a manufacturer of the first application to define the interface and the scene identifier.

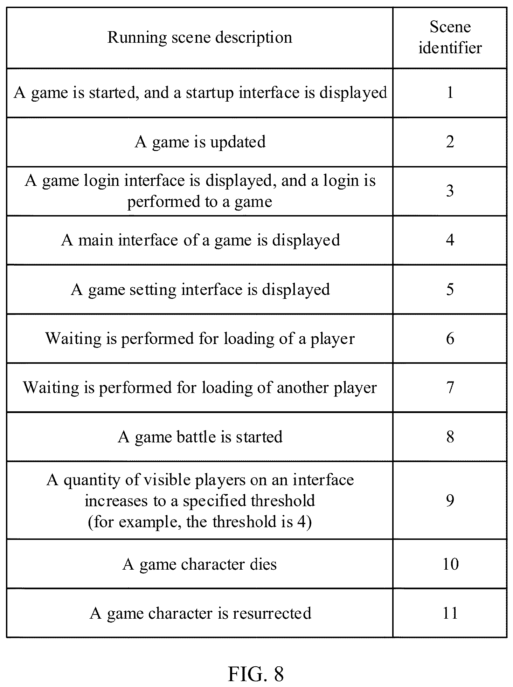

For example, the first application is a game application. FIG. 8 is a diagram of scene identifier definitions according to an embodiment of this application. It can be understood that running scenes shown in FIG. 8 are merely examples, and this is not limited in this embodiment of this application.

In another possible implementation of obtaining the running scene information, the scene information includes a user interface rendering event, output by an operating system, of the first application, and a running scene of the first application may be determined based on the user interface rendering event. Optionally, the user interface rendering event may include one or more of a texture mapping rendering event, a text rendering event, and a control status event. The user interface rendering event may include related information of a rendered object, for example, a type and/or a feature of a rendered texture mapping, content of rendered text, an identifier of a rendered control, or a control status. Optionally, the user interface rendering event may come from a processor that performs user interface rendering, for example, may come from a GPU. Optionally, the user interface rendering event may be subscribed to from the GPU through subscription. When rendering an object (for example, a texture mapping, text, or a control) corresponding to the user interface rendering event, the GPU may send the user interface rendering event to the resource control module at the application framework layer.

Different texture mappings may need to be used in different running scenes, or one or more specific types of mappings is/are used in some running scenes. Therefore, a corresponding running scene may be determined based on a texture mapping rendered by the processor (for example, the GPU). For example, the first application is a game application. The following types of texture mappings are used in a battle scene: a terrain texture mapping, a main scene map, and the like. Correspondingly, if the resource control module determines, based on the user interface rendering event from the GPU, that the terrain texture mapping and/or the main scene map are/is rendered, it can be determined that a corresponding running scene is the battle scene. Still in the example in which the first application is a game application, when a main character participating in a battle dies, a death replay-related mapping is displayed. For example, the GPU obtains, through rendering, key features such as a death replay mapping and a space graying mapping. Correspondingly, if the resource control module determines, based on the user interface rendering event from the GPU, that the death replay-related mapping is rendered, it can be determined that a corresponding running scene is a non-battle scene. Still in the example in which the first application is a game application, if the resource control module determines, based on the user interface rendering event from the GPU, that a non-main scene map, a load status mapping, or the like is rendered, it can be determined that a corresponding running scene is a non-battle scene.

Different text may need to be displayed in different running scenes, or text with specific content is used in some running scenes. Therefore, a corresponding running scene may be determined based on text rendered by the processor (for example, the GPU). For example, the first application is a game application. When a main character participating in a battle dies, death replay-related text is displayed. Correspondingly, if the resource control module determines, based on the user interface rendering event from the GPU, that the death replay-related text is rendered, it can be determined that a corresponding running scene is a non-battle scene.

Different controls may need to be displayed in different running scenes, or specific controls are used in some running scenes, or one control may have different states in different running scenes. For example, for a "Skill" control (used to assign a specific skill to a game character) in a game application, in a non-battle scene, the control is displayed as unavailable and cannot respond to a user operation, and in a battle scene, the control is displayed as available and can respond to a user operation. Therefore, a corresponding running scene may be determined based on a control rendered by the processor (for example, the GPU) or a control status. For example, the first application is a game application. If the resource control module determines, based on the user interface rendering event from the GPU, that a "Settings" control (the control is used for game settings) is rendered, it can be determined that a corresponding running scene is a non-battle scene. Still in the example in which the first application is a game application, if the resource control module determines, based on the user interface rendering event from the GPU, that a "Skill" control is rendered, and the control is displayed in an available state, it can be determined that a corresponding running scene is a battle scene.

S702: Determine a running scene of the first application based on the running scene information.

In a possible implementation, running scenes may be further classified into two or more scene types. Correspondingly, there is a correspondence between each scene type and a resource control policy, and a corresponding resource control policy may be determined based on a scene type.

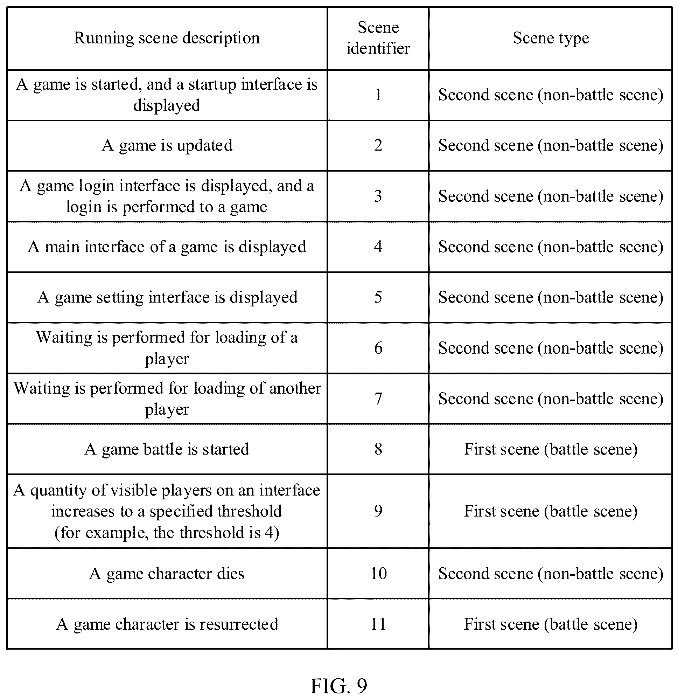

For example, the first application is a game application. Based on the running scenes shown in FIG. 8, FIG. 9 is a diagram of a correspondence between a running scene and a scene type according to an embodiment of this application. When entering a game battle state (for example, a game battle interface is displayed), the first application sends a scene identifier with a value of 8. It can be determined, based on the correspondence, that a current scene is a first scene (namely, a battle scene). When a quantity of visible players on an interface increases to a specified threshold (for example, four persons), the first application sends a scene identifier with a value of 9. Because a battle is likely to occur when there is a large quantity of visible players, this running scene is categorized as a first scene (namely, a battle scene) in the foregoing correspondence. When a game character is resurrected, the first application sends a scene identifier with a value of 11. Because a battle is very likely to occur again when the game character is resurrected, this running scene is categorized as a first scene (namely, a battle scene) in the foregoing correspondence.

S703: Determine, based on the running scene, a resource control operation corresponding to the running scene.

Optionally, the resource control operation includes one or more of a display setting, an audio setting, a report rate setting, a sensor setting, a background application setting, and a frame rate setting.

S704: Perform the resource control operation.

For specific implementations of S703 and S704, refer to the foregoing descriptions. Details are not described again.

In a possible implementation, in FIG. 7, if it is determined in S702 that the running scene of the first application is a first scene, after the corresponding resource control operation is performed in S704, the following operation may be further performed: determining whether current power consumption of the terminal device meets a specified condition. If the current power consumption of the terminal device does not meet the specified condition, resource usage of the terminal device may be adjusted based on a resource adjustment amount, to reduce power consumption of the terminal device. If the current power consumption of the terminal device meets the specified condition, a current state may be maintained. The foregoing process may be performed for a plurality of times until the power consumption of the terminal device meets the specified condition. In this way, when the first application is switched to the first scene, if the power consumption of the terminal device is excessively high after a resource control policy corresponding to the first scene is executed, the power consumption of the terminal device may be appropriately reduced in the foregoing manner. This can achieve a balance between user experience and the power consumption of the terminal device.

Optionally, the specified condition may include: Temperature of the processor is lower than a specified threshold, and/or usage of the processor is lower than a specified threshold.

Optionally, the adjusting resource usage of the terminal device based on a resource adjustment amount may include one or more of the following operations: reducing a frame rate based on a frame rate adjustment amount, reducing a touch report rate based on a touch report rate adjustment amount, reducing luminance based on a luminance adjustment amount, reducing a resolution based on a resolution adjustment amount, reducing texture precision based on a texture precision adjustment amount, and reducing a volume based on a specified volume adjustment amount.

Optionally, values of adjustment amounts for the foregoing resources may be preset. For example, when a luminance value corresponding to the first scene is 80 and a luminance value corresponding to a second scene is 50, a value of the luminance adjustment amount may be 5. Alternatively, values of adjustment amounts for the foregoing resources may be dynamically determined based on current processor temperature and/or usage of the terminal device. For example, if the current processor temperature is higher than a specified threshold and a difference between the current processor temperature and the specified threshold is large, a value of the adjustment amount may be set to a large value.

Different running scenes affect user experience to different degrees. In the foregoing implementation, different resource control operations may be set for different running scenes, so that differentiated control can be performed on resources of the terminal device based on a running scene of an application, to improve user experience. For example, a running scene that affects user experience to a large degree, for example, a battle scene in a game application, may occupy a large quantity of resources, to improve user experience; and a running scene that affects user experience to a small degree, for example, a non-battle scene in a game application, may occupy a small quantity of resources, to reduce power consumption of the terminal device, without greatly affecting user experience.

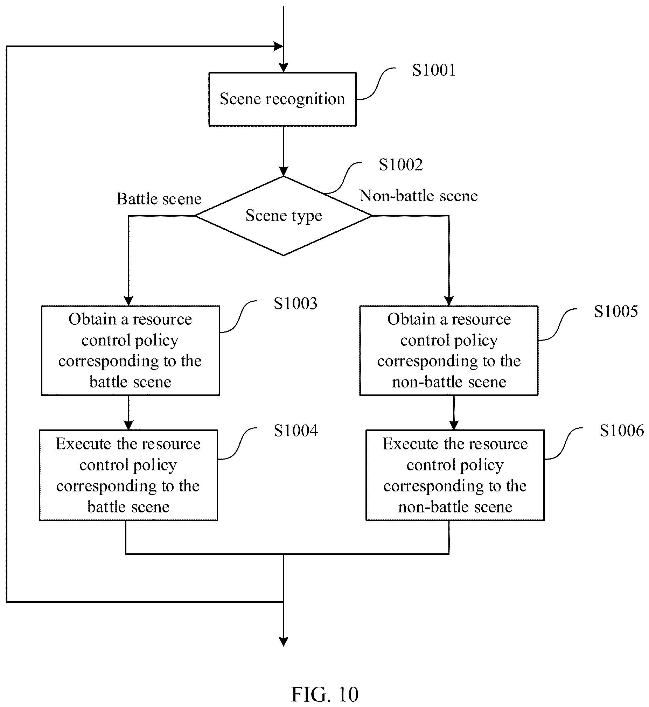

FIG. 10 shows a scene-based terminal control process by using an example in which a first application is a game application. As shown in FIG. 10, in S1001, a terminal device performs game scene recognition. For a specific implementation, refer to S701 and S702 in FIG. 7. In S1002, if a scene is recognized as a battle scene, S1003 and S1004 are performed; or if a scene is recognized as a non-battle scene, S1005 and S1006 are performed. For a specific implementation process of S1003 and S1004 and a specific implementation process of S1005 and S1006, refer to S703 and S704 in FIG. 7. The foregoing process may be repeatedly performed during running of the game until the game is stopped or closed.

In some embodiments of this application, a user may be further allowed to enable a scene-based resource control function, so that the terminal device can perform resource control according to the foregoing method provided in embodiments of this application, and the user may also be allowed to disable the scene-based resource control function. Optionally, if the function is disabled, the terminal device may perform resource control according to another method. This is not limited in this embodiment of this application.

In a possible implementation, the architecture shown in FIG. 2 is used as an example. After a second application (for example, an application assistant) is started, a setting interface is displayed, and the setting interface includes an option for enabling or disabling the scene-based terminal control function. When the user chooses to enable the function by performing a user operation on the option, the second application may send indication information to a resource control module at an application framework layer. If the indication information indicates to enable the scene-based resource control function, the module enables the scene-based resource control function. If the indication information indicates to disable the scene-based resource control function, the module disables the scene-based resource control function.

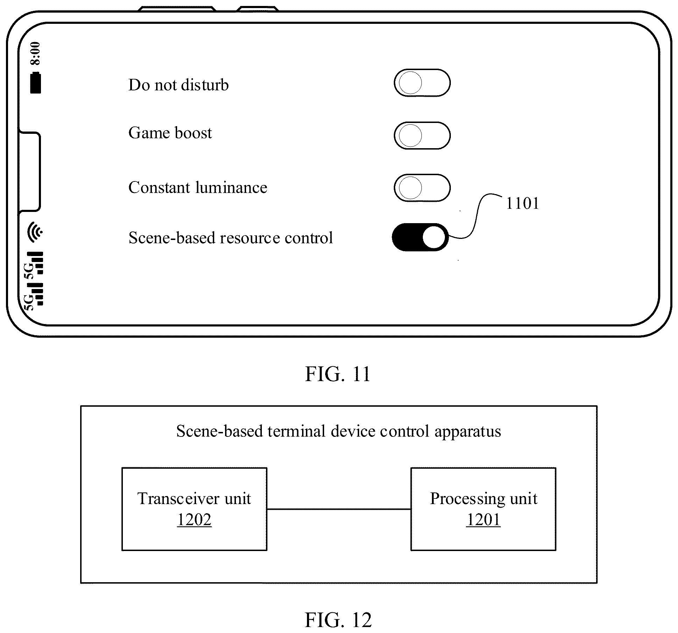

FIG. 11 shows an example setting interface provided by an application assistant according to an embodiment of this application. As shown in the figure, the setting interface may include a "Scene-based resource control" function option 1101. The function option 1101 may be tapped to change an on/off status. In FIG. 11, the function option is an enabled state, indicating that the scene-based resource control function is enabled.

FIG. 12 shows a scene-based terminal control apparatus according to an embodiment of this application. The apparatus may be a terminal device or a functional module in a terminal device. The apparatus may include a processing unit 1201 and a transceiver unit 1202. The processing unit 1201 is configured to: obtain running scene information of a first application; determine a running scene of the first application based on the running scene information; determine, based on the running scene, a resource control operation corresponding to the running scene; and perform the resource control operation. The scene information includes scene indication information output by the first application and/or a user interface rendering event, output by an operating system, of the first application. The user interface rendering event includes one or more of a texture mapping rendering event, a text rendering event, and a control status event. The resource control operation includes one or more of a display setting, an audio setting, a report rate setting, a sensor setting, and a background application setting.

For more detailed descriptions of the processing unit 1201 and the transceiver unit 1202, directly refer to related descriptions in the method embodiment shown in FIG. 7. Details are not described herein again.

Clearly, a person skilled in the art can make various modifications and variations to this application without departing from the scope of this application. This application is intended to cover these modifications and variations of this application provided that they fall within the scope of the claims of this application and equivalent technologies thereof.

## Claims

1. A scene-based terminal control method, applied to a terminal device, wherein the method comprises:
obtaining running scene information of a first application, wherein the scene information comprises scene indication information output by the first application and/or a user interface rendering event, output by a system, of the first application, and the user interface rendering event comprises one or more of a texture mapping rendering event, a text rendering event, and a control status event;
determining a running scene of the first application based on the running scene information;
determining, based on the running scene, a resource control operation corresponding to the running scene, wherein the resource control operation comprises one or more of a display setting, an audio setting, a report rate setting, a sensor setting, and a background application setting; and
performing the resource control operation.

2. The method according to claim 1, wherein the first application is a game application, and the texture mapping rendering event comprises one or more of the following: an event of rendering a terrain texture mapping, an event of rendering a main scene map, and an event of rendering a mapping of a game character status.

3. The method according to claim 2, wherein determining the running scene of the first application based on the running scene information comprises:
if the running scene information comprises the event of rendering the terrain texture mapping and/or the event of rendering the main scene map, determining that the running scene of the first application is a first scene; or
if the running scene information comprises the event of rendering the mapping of the game character status, and the event of rendering the mapping of the game character status is an event of a mapping of death of a game character, determining that the running scene of the first application is a second scene.

4. The method according to claim 1, wherein the scene indication information output by the first application comprises a scene identifier;
determining the running scene of the first application based on the running scene information comprises:
determining, based on a correspondence between a running scene identifier and a running scene type, a running scene type corresponding to the scene identifier; and
determining, based on the running scene, the resource control operation corresponding to the running scene comprises:
determining, based on the running scene type, a resource control policy corresponding to the running scene type.

5. The method according to any one of claims 1 to 4, wherein determining, based on the running scene, the resource control operation corresponding to the running scene comprises:
determining, based on the running scene, a resource control policy corresponding to the running scene; and
determining, based on the resource control policy, a resource control operation corresponding to the resource control policy, wherein
the resource control policy comprises one or more of the following: a responsiveness level, a display effect level, a sound quality level, a vibration level, and a background load level; and determining, based on the resource control policy, the resource control operation corresponding to the resource control policy comprises one or more of the following:
determining a target report rate and/or a responsiveness thread scheduling priority based on the responsiveness level;
determining one or more of target luminance, a target resolution, target texture precision, and a target frame rate based on the display effect level;
determining a target volume and/or a target quantity of sound channels based on the sound quality level;
determining an on/off status of a sensor based on the vibration level; and
determining a network channel on/off status of a background application based on the background load level.

6. The method according to claim 5, wherein the first application is the game application, and the running scene of the first application is one of the first scene and the second scene;
a responsiveness level corresponding to the first scene is higher than a responsiveness level corresponding to the second scene;
a display effect level corresponding to the first scene is higher than a display effect level corresponding to the second scene;
a sound quality level corresponding to the first scene is higher than a sound quality level corresponding to the second scene;
a vibration level corresponding to the first scene is higher than a vibration level corresponding to the second scene; and
a background load level corresponding to the first scene is lower than a background load level corresponding to the second scene.

7. The method according to claim 6, wherein the running scene is the first scene, and the method further comprises:
determining a first area, wherein the first area is an area, on a user interface of the first application, to which a user pays attention; and
performing the resource control operation comprises:
after the target frame rate is determined based on the display effect level, setting a frame rate of the first area based on the target frame rate.

8. A scene-based terminal control apparatus, comprising a processing unit and a transceiver unit, wherein
the processing unit is configured to:
obtain running scene information of a first application, wherein the scene information comprises scene indication information output by the first application and/or a user interface rendering event, output by an operating system, of the first application, and the user interface rendering event comprises one or more of a texture mapping rendering event, a text rendering event, and a control status event;
determine a running scene of the first application based on the running scene information;
determine, based on the running scene, a resource control operation corresponding to the running scene, wherein the resource control operation comprises one or more of a display setting, an audio setting, a report rate setting, a sensor setting, and a background application setting; and
perform the resource control operation.

9. The apparatus according to claim 8, wherein the first application is a game application, and the texture mapping rendering event comprises one or more of the following: an event of rendering a terrain texture mapping, an event of rendering a main scene map, and an event of rendering a mapping of a game character status.

10. The apparatus according to claim 9, wherein the processing unit is specifically configured to:
if the running scene information comprises the event of rendering the terrain texture mapping and/or the event of rendering the main scene map, determine that the running scene of the first application is a first scene; or
if the running scene information comprises the event of rendering the mapping of the game character status, and the event of rendering the mapping of the game character status is an event of a mapping of death of a game character, determine that the running scene of the first application is a second scene.

11. The apparatus according to claim 8, wherein the scene indication information output by the first application comprises a scene identifier; and
the processing unit is specifically configured to:
determine, based on a correspondence between a running scene identifier and a running scene type, a running scene type corresponding to the scene identifier; and
determine, based on the running scene type, a resource control policy corresponding to the running scene type.

12. The apparatus according to any one of claims 8 to 11, wherein the processing unit is specifically configured to:
determine, based on the running scene, a resource control policy corresponding to the running scene; and
determine, based on the resource control policy, a resource control operation corresponding to the resource control policy, wherein
the resource control policy comprises one or more of the following: a responsiveness level, a display effect level, a sound quality level, a vibration level, and a background load level; and determining, based on the resource control policy, the resource control operation corresponding to the resource control policy comprises one or more of the following:
determining a target report rate and/or a responsiveness thread scheduling priority based on the responsiveness level;
determining one or more of target luminance, a target resolution, target texture precision, and a target frame rate based on the display effect level;
determining a target volume and/or a target quantity of sound channels based on the sound quality level;
determining an on/off status of a sensor based on the vibration level; and
determining a network channel on/off status of a background application based on the background load level.

13. The apparatus according to claim 12, wherein the first application is the game application, and the running scene of the first application is one of the first scene and the second scene;
a responsiveness level corresponding to the first scene is higher than a responsiveness level corresponding to the second scene;
a display effect level corresponding to the first scene is higher than a display effect level corresponding to the second scene;
a sound quality level corresponding to the first scene is higher than a sound quality level corresponding to the second scene;
a vibration level corresponding to the first scene is higher than a vibration level corresponding to the second scene; and
a background load level corresponding to the first scene is lower than a background load level corresponding to the second scene.

14. The apparatus according to claim 12, wherein the running scene is the first scene, and the processing unit is further configured to:
determine a first area, wherein the first area is an area, on a user interface of the first application, to which a user pays attention; and
the processing unit is specifically configured to:
after the target frame rate is determined based on the display effect level, set a frame rate of the first area based on the target frame rate.

15. An apparatus, comprising a processor and a memory, wherein the memory stores one or more computer programs, the one or more computer programs comprise instructions, and when the instructions are executed by the processor, the apparatus is enabled to perform the method according to any one of claims 1 to 7.

16. A readable storage medium, comprising a computer program, wherein when the computer program is run on an apparatus, the apparatus is enabled to perform the method according to any one of claims 1 to 7.

17. A computer program product, wherein when the computer program product runs on a terminal device, the terminal device is enabled to perform the method according to any one of claims 1 to 7.

18. A chip system, comprising: a memory, configured to store a computer program; and a processor, wherein when the processor invokes the computer program from the memory and runs the computer program, a terminal device on which the chip system is installed is enabled to perform the method according to any one of claims 1 to 7.
